# FASCICULE DE BREVET EUROPEEN

(11) **EP 0 872 902 B1**
(45) Date de publication et mention de la délivrance du brevet: **10.01.2001**
(21) Numéro de dépôt: 98400913.4
(22) Date de dépôt: 14.04.1998
(51) Int. Cl.: H01M 4/02, H01M 4/40

(54) **Feuillard d'anode alliée et dense à relaxation locale de stress**
Legiertes, kompaktes Anodenblech mit internem Spannungsausgleich
Dense alloyed anode metal sheet with internal stress compensation

(30) Priorité: 14.04.1997 CA 2202604
(43) Date de publication de la demande: 21.10.1998
(73) Titulaire: HYDRO-QUEBEC, Montréal Québec H2Z 1A4 (CA)
(72) Inventeur: Gauthier, Michel, LaPrairie, Québec H5R 1E6 (CA); Zaghib, Karim, Longueil, Québec J4G 1H9 (CA); Armand, Michel, Montréal, Québec H3T 1N2 (CA); Poirier, Sylvain, Sainte-Julie, Québec J3E 1C1 (CA); Bellemare, Roger, Boucherville, Québec J4B 5R6 (CA)
(74) Mandataire: Bertrand, Didier

(56) Documents cités:
- EP-A- 0 692 833
- JP-A- 8 321 300
- US-A- 4 652 506
- PATENT ABSTRACTS OF JAPAN vol. 015, no. 009 (E-1021), 9 janvier 1991 & JP 02 262273 A (SANYO ELECTRIC CO LTD), 25 octobre 1990,
- BESENHARD J O ET AL: "Will advanced lithium-alloy anodes have a chance in lithium-ion batteries?" JOURNAL OF POWER SOURCES, vol. 68, no. 1, 1997, page 87-90 XP004100203 & DATABASE INSPEC INSTITUTE OF ELECTRICAL ENGINEERS, STEVENAGE, GB Inspec No. Inspec No 5833035,
- BESENHARD J O ET AL: "DIMENSIONALLY STABLE LI-ALLOY ELECTRODES FOR SECONDARY BATTERIES" SOLID STATE IONICS, vol. 40 / 41, no. PART 02, 1 août 1990, pages 525-529, XP000173410
- DATABASE INSPEC INSTITUTE OF ELECTRICAL ENGINEERS, STEVENAGE, GB Inspec No. 5493952, YANG J ET AL: "Small particle size multiphase Li-alloy anodes for lithium-ion-batteries" XP002070195 & SOLID STATE IONICS, DIFFUSION & REACTIONS, SEPT. 1996, ELSEVIER, NETHERLANDS, vol. 90, no. 1-4, ISSN 0167-2738, pages 281-287,

## Description

La présente invention concerne un feuillard d'anode allié et dense à relaxation locale de stress. Plus particulièrement, l'invention se rapporte à un générateur électrochimique incluant une électrode négative comprenant un feuillard d'un métal hôte notamment l'aluminium, le plomb, l'argent, le silicium, le zinc, le magnésium, le carbone, ou des combinaisons de ces derniers, le feuillard de métal hôte étant destiné à constituer ultérieurement une électrode négative et possédant la propriété d'absorber localement toute expansion latérale et de prévenir substantiellement tout changement dans le plan du feuillard lors de la formation d'alliage entre le métal hôte et le métal alcalin, notamment le lithium.

Les générateurs à électrolytes polymères les plus avancés utilisent le lithium métallique, parfois le sodium, ou d'autres métaux alcalins, comme feuillards d'anode. Les métaux alcalins sont malléables et peuvent être mis en oeuvre sous forme de films minces (CA 2,099,526 et 2,099,524). Toutefois l'usage du lithium métallique ou d'autres métaux alcalins présente dans certains cas d'utilisation extrême, e.g. à des températures supérieures à 100°C, des risques de fusion du lithium ou du métal alcalin et de destruction de la cellule électrochimique. De plus, dans des conditions forcées de cyclage électrochimique, la formation de dendrites par exemple de lithium peut être induite, notamment, par des courants de recharge trop élevés, avec tous les désavantages connus que cela implique, alors que l'alliage fonctionnant à un potentiel plus anodique, par exemple entre +300 à 450 mV pour le lithium aluminium vs le lithium, ne permet par le dépôt de lithium ni la croissance dendritique.

L'usage d'alliages de métaux alcalins notamment le lithium a été proposé et démontré avec succès dans le cas de générateurs fonctionnant en milieux sels fondus (U.S. 4.489.143). En milieux organiques, et plus particulièrement en milieu polymère, où les épaisseurs des films d'électrodes sont inférieures à 100 micromètres (µm) il devient très difficile de mettre en oeuvre des feuillards d'anode alliés. En effet, les composés intermétalliques du lithium utilisables comme anodes, tels que LiAl, Li₂₁Si₅, Li₂₁Sn₅, Li₂₂Pb₅ et autres sont durs et cassants et ne peuvent être laminés comme le lithium ou le lithium faiblement allié.

Il a été montré (CA 1.222.543) que ces anodes peuvent être élaborés en film mince en produisant des composites constituées de poudres du composé intermétallique liées par l'électrolyte polymère, ou encore qu'il était possible dans certaines conditions de pré-lithier le feuillard du métal hôte de l'anode en traitant chimiquement la surface du feuillard (U.S. 4.590.840) ou en chargeant électrochimiquement une partie de ce feuillard (U.S. 4.794.060). Toutefois, ces techniques quoique fonctionnelles dans certaines conditions, mettent en oeuvre des matériaux réactifs, et les alliages pré-insérés sont souvent pyrophoriques ou posent des difficultés de mise en oeuvre et d'optimisation des performances. Lorsque les anodes sont préparées à l'état déchargé, une des difficultés majeures à surmonter vient de l'importante variation volumique résultant de la formation de l'alliage qui entraîne des stress importants sur la structure.

Lorsque l'on cherche à former l'alliage à partir d'un feuillard du métal hôte non-lithié lors de l'assemblage ou après l'assemblage d'un générateur à électrolyte polymère, l'expansion volumique de la structure dans le sens de l'épaisseur des feuillards peut être compensée par un désign approprié de la cellule en accommodant par exemple l'augmentation d'épaisseur totale des feuillards superposés, d'autant plus que dans le sens de l'épaisseur, la variation est très courte et donc beaucoup plus négligeable.

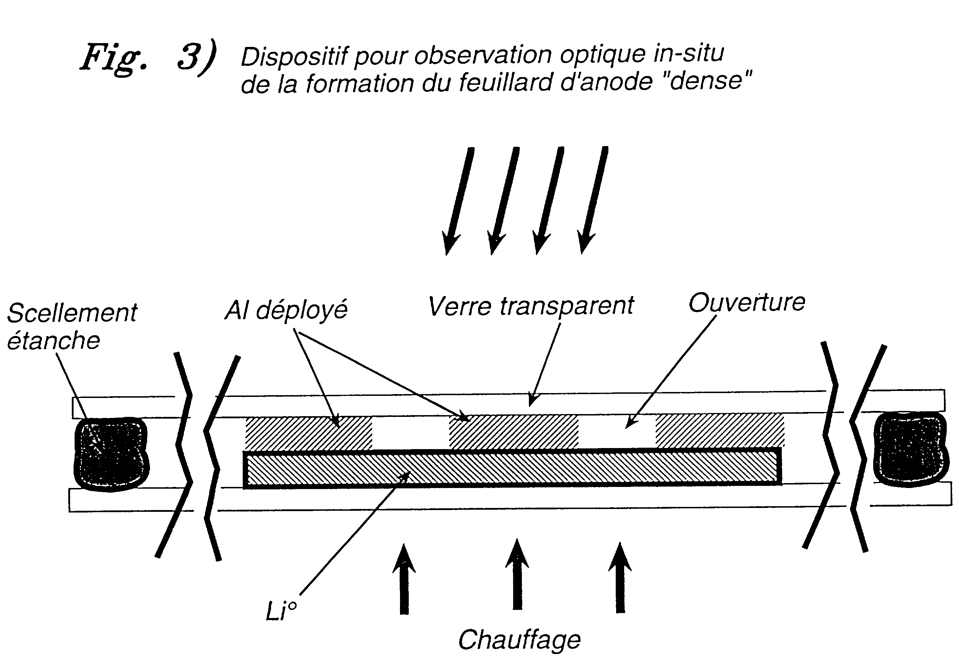

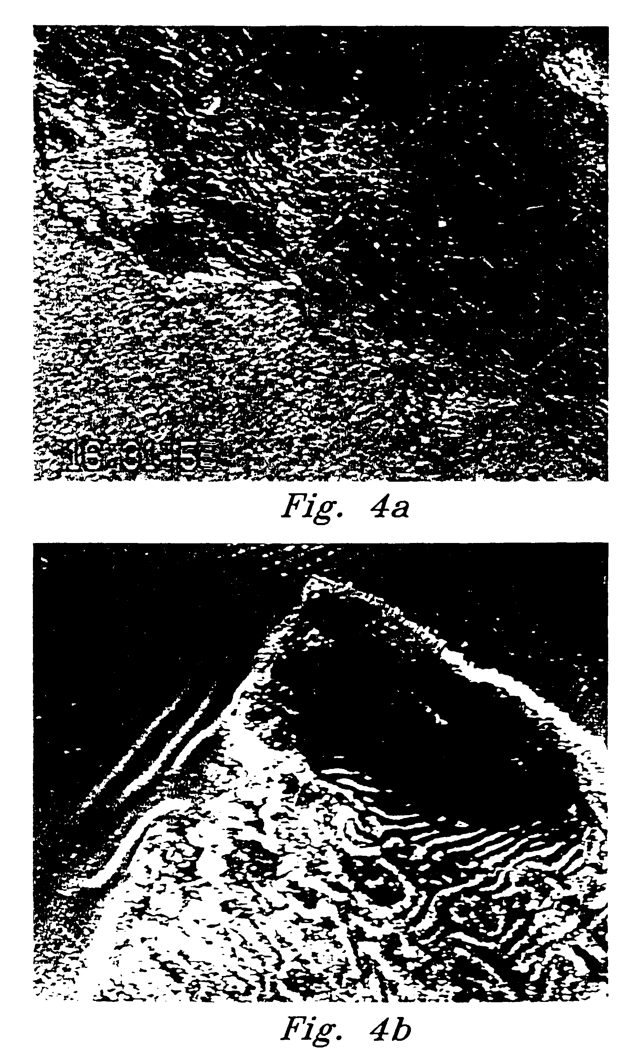

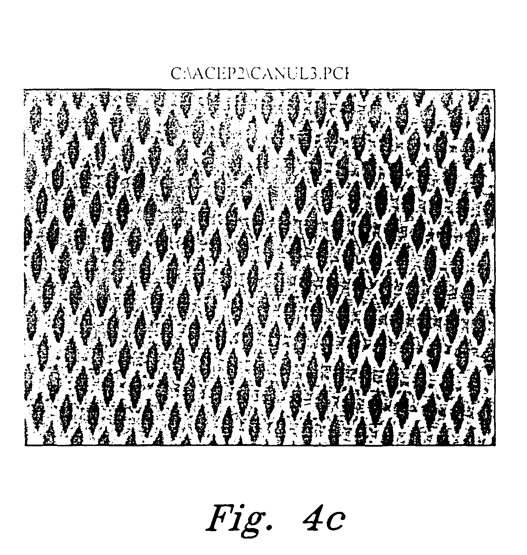

L'expansion du métal hôte dans le plan des feuillards se cumule toutefois sur toute la surface de ce dernier et crée des plis afin d'accommoder le stress local généré par l'expansion. Il s'ensuit des courts-circuits entre les électrodes ou des défauts mécaniques qui nuisent au fonctionnement du générateur. Ce phénomène est illustré sur la photographie de la figure 4b dans le cas d'un feuillard d'aluminium ordinaire que l'on allie au lithium dans le dispositif à électrolyte polymère de la figure 3. Dans un accumulateur réel, les surfaces développées, l'adhésion des films entre eux et la pression maintenue sur l'ensemble de la cellule interdisent tout glissement de la structure hôte pour accommoder cette expansion latérale.

On connaît par JP 08 321 300 A ou JP 02 262 273 A des électrodes comprenant des vides distribués tridimensionnellement et agissant sur l'expansion en trois dimensions. Mais ces vides ne parviennent pas à absorber toute expansion latérale et à prévenir substantiellement tout changement dans le plan du feuillard lors de la formation d'alliages.

La présente invention concerne un générateur électrochimique comprenant des films minces incluant une électrode positive et son collecteur, et un feuillard d'un métal hôte destiné à constituer ultérieurement une électrode négative, de même qu'un électrolyte conducteur d'ions alcalins ainsi qu'un moyen constituant une source d'ions alcalins, caractérisé en ce que ledit feuillard de métal hôte présente des ajours, la quantité d'ajours et leur disposition dans ledit feuillard de métal hôte étant propre à absorber localement dans lesdits vides toute expansion latérale dudit feuillard de métal hôte et ainsi prévenir substantiellement tout changement cumulatif dans le plan dudit feuillard de métal hôte lorsqu'il y a formation initiale d'alliage dans ledit feuillard entre ledit métal hôte et un métal alcalin apporté par lesdits ions alcalins.

À l'état chargé, il est à noter que le générateur selon la présente invention est caractérisé en ce que ledit feuillard est au moins en partie devenu un alliage dudit métal hôte et dudit métal alcalin.

Selon une réalisation préférée de l'invention, la source d'ions alcalins est constituée par un feuillard de métal alcalin mis en contact avec ledit feuillard de métal hôte, le métal alcalin au départ de ladite source d'ions alcalins étant allié avec ledit métal hôte lorsque le générateur est à l'état chargé.

Selon une autre réalisation, la source d'ions alcalins se retrouve dans l'électrode positive, le métal alcalin au départ de ladite source d'ions alcalins et du feuillard de métal alcalin étant allié avec ledit métal hôte lorsque le générateur est à l'état chargé.

Selon une autre réalisation, la source d'ions alcalins est constituée par un feuillard de métal alcalin mis en contact avec ledit feuillard de métal hôte, et se retrouve aussi dans l'électrode positive, le métal alcalin au départ de ladite source d'ions alcalins et du feuillard de métal alcalin étant allié avec ledit métal hôte lorsque le générateur est à l'état chargé. De préférence, le métal alcalin est le lithium.

Selon une autre réalisation, le métal hôte est constitué d'un métal capable de former des alliages à haute activité en métal alcalin et dans lequel la diffusion du métal alcalin est rapide. Par exemple, ces alliages à haute activité en métal alcalin possède un potentiel compris entre 0 et +1,5 Volt par rapport au potentiel du métal alcalin pur. Le métal hôte est choisi de préférence parmi Al, C, Sn, Pb, Ag, Si, Zn, Mg ou des combinaisons de ces derniers. Il est entendu que dans le contexte de la présente invention, on considérera que le carbone est un métal bien que ce ne soit pas strictement le cas.

Les ajours du feuillard de métal hôte représentent habituellement entre environ 5 et 80% de la surface totale dudit feuillard de métal hôte, de préférence entre environ 5 et 30%. Ceux-ci peuvent se présenter sous forme de grillage, ou sous forme de métal déployé obtenu par découpe-étirement et éventuellement relaminage.

De préférence, l'électrolyte conducteur d'ions alcalins comprend un électrolyte polymère. Il peut aussi être une matrice polymère, un électrolyte liquide ainsi qu'un sel au moins partiellement soluble dans l'électrolyte liquide.

Selon une autre réalisation, le feuillard de métal hôte comporte une couche d'électrolyte polymère sur au moins l'une de ses faces, la couche étant disposée sur le feuillard de métal hôte de façon à maximiser les échanges ioniques entre l'alliage et l'électrolyte conducteur d'ions alcalins agissant comme séparateur entre l'électrode négative et l'électrode positive.

L'électrolyte polymère peut contenir du carbone distribué dans l'électrolyte polymère de façon à agir comme additif de conduction électronique, afin de maximiser les échanges ioniques et les échanges électroniques.

Le feuillard de lithium peut se situer d'un seul côté du feuillard de métal hôte. Il peut aussi se situer des deux côtés du feuillard de métal hôte.

Généralement on obtient l'alliage au moment de l'assemblage du générateur. On peut aussi l'obtenir au moment d'une réaction d'activation consécutive à l'assemblage du générateur.

Selon une autre réalisation, le feuillard de lithium se situe sur la face du feuillard de métal hôte opposée à l'électrode positive, de façon à différer la formation d'alliage après l'assemblage du générateur et à maximiser la sécurité des procédures d'assemblage du générateur. De préférence, le métal hôte est en quantité excédentaire par rapport au métal alcalin de façon à laisser une partie du métal hôte non réagi lui permettant ainsi d'agir comme collecteur de courant sur le plan du feuillard de métal hôte.

Normalement, le générateur selon l'invention est constitué de films enroulés cylindriques ou à plat ou empilés à plat. De plus, il est préférable que le feuillard de métal hôte et le collecteur de l'électrode positive excèdent de chaque côté des films enroulés ou à plat ou empilés à plat de façon à permettre une prise de courant efficace sur toute l'arête latérale respectivement du collecteur et du feuillard de métal hôte. La prise de courant s'obtient par exemple par pulvérisation de métal conducteur sur ladite arête latérale des feuillards.

Selon une autre réalisation, le feuillard d'électrode négative en alliage est obtenu après assemblage du générateur par traitement thermique du feuillard de métal hôte et du feuillard de métal alcalin en contact avec le feuillard de métal hôte, le traitement thermique étant effectué sous pression ou confinement mécanique et dans des conditions assurant le maintien de la planéité du feuillard d'électrode négative.

De préférence, le métal hôte a une épaisseur entre environ 1 et 150 µm, plus particulièrement entre environ 10 et 100 µm.

L'invention se rapporte aussi à une méthode de fabrication d'un générateur électrochimique selon laquelle on prépare des films minces incluant une électrode positive et son collecteur, et un feuillard d'un métal hôte destiné à constituer ultérieurement une électrode négative de même qu'un électrolyte conducteur d'ions alcalins, ainsi qu'un moyen constituant une source d'ions alcalins et l'on dispose l'électrode négative et le feuillard de part et d'autre de l'électrolyte conducteur, caractérisé en ce que l'on choisit le feuillard à partir d'un feuillard d'un métal hôte présentant des ajours, la quantité d'ajours et leur disposition dans le feuillard de métal hôte étant propre à absorber localement dans les vides toute expansion latérale du feuillard de métal hôte et ainsi prévenir substantiellement tout changement cumulatif dans le plan du feuillard de métal hôte lorsqu'il y a formation initiale d'alliage dans le feuillard entre le métal hôte et un métal alcalin apporté par les ions alcalins, et l'on assemble ensuite les films, l'électrolyte conducteur et la source d'ions alcalins de façon à constituer le générateur.

La présente invention porte donc par exemple sur la formation d'un feuillard d'anode allié obtenu de préférence lors de l'assemblage du générateur à partir du feuillard d'un métal hôte ajouré et d'une source de lithium. La formation de l'alliage est de préférence faite au moment de l'assemblage du générateur ou dans une étape ultérieure de conditionnement de l'alliage. Les procédés utilisés de préférence consistent en un traitement chimique d'un métal hôte à partir d'un feuillard de lithium métallique ou, encore à partir d'une charge électrochimique du métal hôte à partir d'une cathode préalablement lithiée, par exemple renfermant du LiCoO₂, Li₂Mn₂O₄ (U.S. 5.425.932).

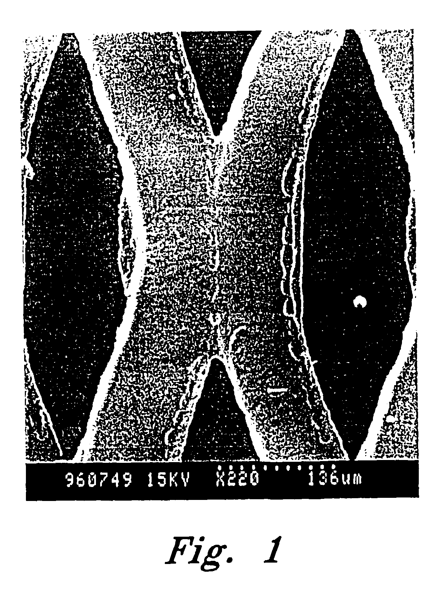

L'apport principal de l'invention consiste à utiliser un feuillard de métal hôte ajouré afin de permettre d'absorber "localement" le stress mécanique sur la structure du feuillard et de son environnement qui résulte de l'expansion volumique associé à la formation de l'alliage. Un exemple non-limitatif d'une structure hôte d'aluminium utilisable est illustré à la figure 1 dans le cas d'un produit disponible commercialement sous le nom de EXMET® et utilisé couramment comme collecteur de courant inerte dans certains accumulateurs. Il a été constaté que ces collecteurs pouvaient également avoir la propriété recherchée pour l'invention et le nouvel usage ainsi que le bon fonctionnement en tant qu'anode dans des générateurs à électrolytes polymères notamment au niveau du cyclage et de la sécurité, a été démontré. Le taux d'ouverture des produits présentement disponibles est très élevé, par exemple près de 50% de la surface ajourée, tel qu'illustré à la figure 1 pour un feuillard de 25 micromètres d'épaisseur. Ce pourcentage d'ouverture peut être réduit de façon à former une surface d'anode pratiquement pleine après la formation de l'alliage.

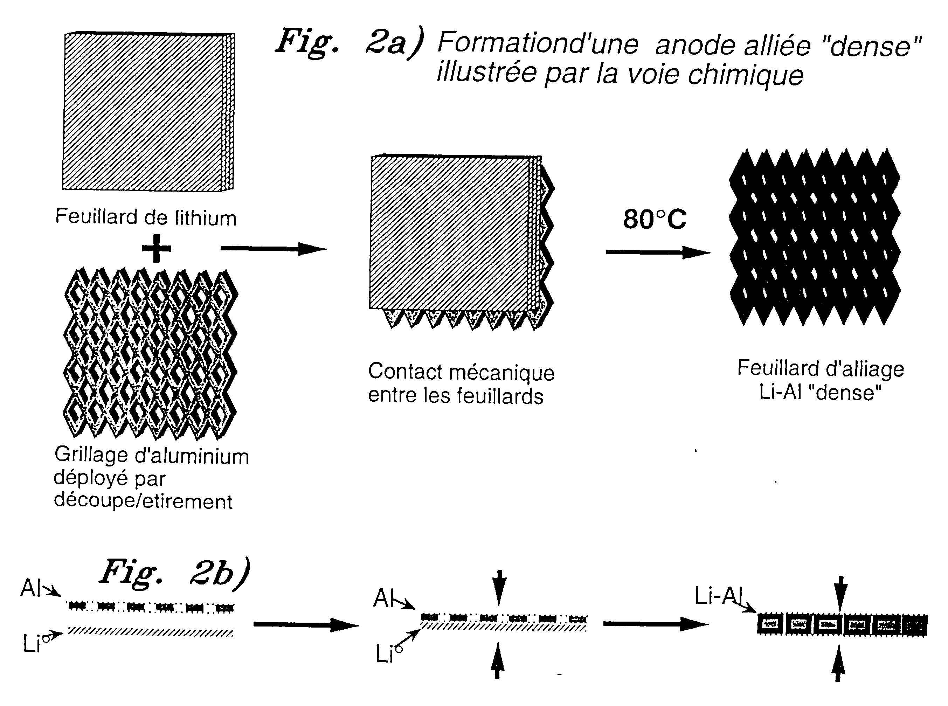

Bien entendu, d'autres structures reproduisant les caractéristiques de l'invention sont possible, telles qu'obtenues, par exemple, par gravure de motifs encavés dans un feuillard par des procédés mécaniques ou autres. La disposition des ajours et/ou des espaces vides, leur dimension et leur pourcentage volumique du feuillard étant choisis afin d'absorber l'expansion volumique du métal hôte dans le plan du feuillard, de façon à optimiser la densité du feuillard allié après réaction et à conserver plane la surface du feuillard allié. Les figures 2 a et 2 b de l'invention illustrent le comportement du feuillard hôte lors de la formation de l'alliage.

Un des avantages de la présente invention est en outre sa simplicité de mise en oeuvre et son caractère sécuritaire du fait que l'alliage est sous forme dense (non-composite) et de préférence formé après la mise en oeuvre du générateur. De plus, l'invention permet l'optimisation de la densité d'énergie volumique par l'existence de zones denses et de la puissance du générateur par le contrôle du taux d'ajours et la présence optionnelle de polymère dans les espaces résiduels du feuillard d'anode après formation de l'alliage et expansion de la structure. Un autre bénéfice de l'invention, lorsque mise en oeuvre avec des électrolytes polymères, est de minimiser le taux de pénétration de l'électrolyte polymère dans les parties denses de l'anode et ainsi de préserver la qualité des contacts électriques dans la structure alliée. En effet, puisque le polymère ne pénètre pas dans l'alliage, il ne peut isoler les particules de ce dernier.

Une façon avantageuse de mettre en oeuvre l'invention consiste à contrôler la quantité de lithium dans la source de façon à laisser après la formation de l'alliage une partie du métal hôte non-réagi pour jouer le rôle de collecteur latéral dans le plan du feuillard.

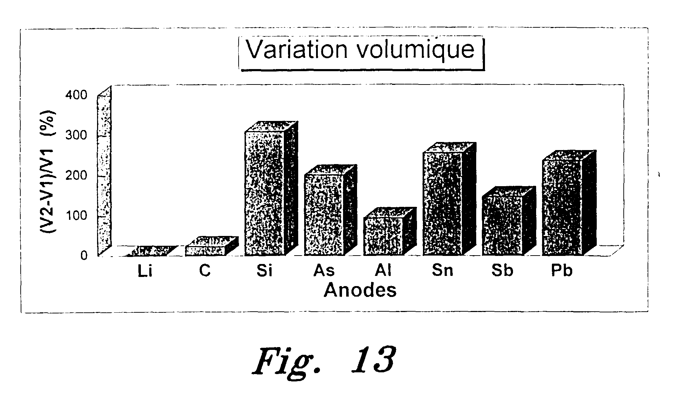

Une façon simple de mettre en oeuvre l'anode de l'invention consiste à appliquer le feuillard EXMET® précédemment décrit contre un feuillard de lithium d'épaisseur prédéterminée. L'essentiel de cette opération est illustré aux figures 2 a, 2 b et 3 et sera décrit en détail dans les exemples qui suivent. Bien entendu, le taux d'ajours, la façon de réaliser les espaces vides et leur forme géométrique pour optimiser la densité du feuillard allié et amortir le stress généré localement par la formation de l'alliage peuvent varier selon la nature du métal hôte et la densité d'énergie recherchée, et en fonction d'autres paramètres connus de l'homme de métier. A titre indicatif, le tableau I et la figure 13 illustrent les propriétés essentielles d'un certain nombre des composés hôtes possibles ainsi que les variations de volume résultant de la formation de l'alliage de lithium équivalent, de façon à optimiser le taux d'ajours.

De façon assez générale mais non limitative, le taux d'ajours variera entre 5 et 80%, de préférence entre 5 et 30%, de façon à obtenir un feuillard sensiblement dense et plat dont les performances électrochimiques et sécuritaires seront optimales. En pratique, la quantité de métal hôte vis-à-vis de la quantité de lithium métallique est généralement ajusté de façon à laisser un excès du premier pour qu'il puisse agir comme collecteur de courant de l'anode dans le plan du feuillard.

Pour certains métaux comme l'aluminium, il a été constaté que l'usage d'un mince film d'une composite de carbone en surface de métal hôte facilite la formation uniforme de l'alliage, notamment au niveau de la qualité des contacts électroniques.

Selon le type de générateur recherché, on utilisera un ou deux feuillards de lithium pour un feuillard central du métal hôte, ou vice versa, deux feuillards de métal hôte pour un feuillard de lithium.

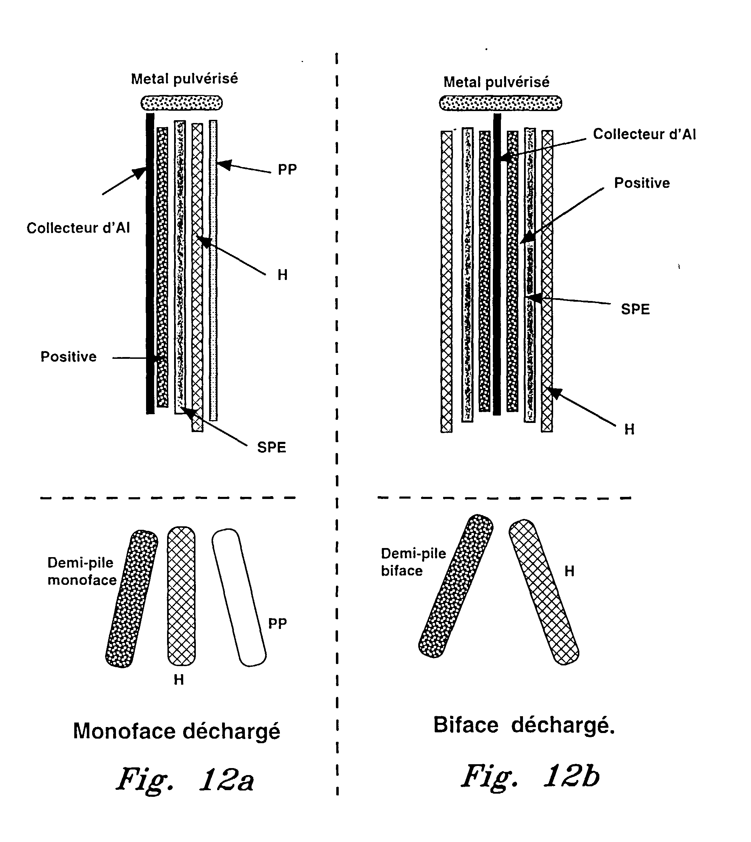

Tel qu'illustré à la figure 12a, une façon préférée de réaliser le générateur électrochimique consiste à co-enrouler les feuillards de la cathode (collecteur et cathode composite) et de l'électrolyte avec l'anode sous forme d'un feuillard du métal hôte et un feuillard de lithium, et dans un système monoface, avec film plastique isolant tel que le polypropylène.

La figure 12b, est une façon préférée de réaliser le générateur électrochimique qui consiste à co-enrouler les feuillards de la cathode (collecteur et cathode composite) et de l'électrolyte avec l'anode sous forme d'un feuillard du métal hôte et deux feuillards de lithium et dans un système biface. Dans cet assemblage, les feuillards respectifs de la cathode (collecteur) et de l'anode (métal hôte en débordement du lithium) débordent de chaque côté de l'enroulement de façon à permettre la collection des électrodes sur l'ensemble de l'arête de chaque feuillard en excès. Un métal pulvérisé peut alors être appliqué aux extrémités de l'enroulement afin d'assurer un échange électrique et thermique optimal.

L'invention est d'autre part illustrée par les dessins annexés, donnés sans caractère limitatif et dans lesquels
la figure 1 est une reproduction d'une photographie au microscope électronique à balayage, à l'échelle x220, d'un feuillard d'aluminium déployé de type EXMET® ;
la figure 2a est un schéma en perspective illustrant la formation d'une électrode alliée selon la présente invention;
la figure 2b est une vue en coupe de l'illustration représentée sur la figure 2a;
la figure 3 est un schéma en coupe verticale d'un dispositif expérimental permettant l'observation optique in situ de la formation d'un alliage à partir d'un feuillard de lithium et d'une structure hôte d'aluminium déployé;
la figure 4a est une reproduction d'une photographie illustrant l'apparence d'un feuillard d'aluminium "pleine surface" et d'un feuillard de lithium appliqué mécaniquement sur le feuillard d'aluminium au moyen du dispositif selon la figure 3, avant formation d'alliage;
la figure 4b est une reproduction d'une photographie selon la figure 4a, mais après formation d'alliage et disparition du lithium par réaction chimique à 80°C;
la figure 4c est une reproduction d'une photographie illustrant l'apparence d'un feuillard d'aluminium déployé et d'un feuillard de lithium au moyen du dispositif selon la figure 3, après formation d'alliage;
la figure 5a est une reproduction précise d'une photographie au microscope électronique à balayage montrant le détail d'un feuillard EXMET® identique à celui illustré en figure 1, après chauffage d'un feuillard d'aluminium déployé avec un feuillard de lithium à 80°C, dans un dispositif illustré en figure 3;
la figure 5b est une reproduction d'une photographie au microscope électronique à balayage du même feuillard que celui illustré en figure 5a, mais illustrant une plus grande surface démontrant l'absence de pli ou de cannelure;
la figure 6a est un schéma en coupe verticale illustrant la fabrication d'un générateur selon l'invention avec pile à anode monoface;
la figure 6b est un schéma similaire à celui de la figure 6a, mais pour une pile à anode monoface avec film à base de carbone de type I;
la figure 6c est un schéma similaire à celui de la figure 6a, mais pour une pile à anode monoface avec film à base de carbone de type II;
la figure 6d est un schéma similaire à celui de la figure 6a, mais pour une pile à anode monoface avec film à base de carbone de type III;
la figure 6e est un schéma similaire à celui de la figure 6a, mais pour une pile à anode biface;
la figure 7 est un graphique montrant des courbes de décharges initiales comparées d'un générateur conventionnel au lithium et d'un générateur selon la figure 6b;
la figure 8 est un graphique portant sur la stabilité comparée par la technique ARC pour un générateur conventionnel et un générateur selon la présente invention;
la figure 9 est un graphique similaire à celui de la figure 7 sauf que le générateur est celui de la figure 6c;
la figure 10 est un graphique montrant les courbes de cyclage d'un générateur illustré en figure 6b;
la figure 11 est un graphique montrant les courbes de cyclages d'un générateur illustré en figure 6d;
la figure 12a est un schéma en perspective d'assemblage d'une pile enroulée à plat en mode monoface à l'état déchargé selon l'invention;
la figure 12b est un autre schéma d'assemblage d'une pile enroulée à plat en mode biface à l'état déchargé selon l'invention; et
la figure 13 est un graphique montrant l'expansion volumique de différents alliages.

En figure 1 l'aluminium déployé a 25 micromètres d'épaisseur et fut découpé, étiré et aplani.

En se référant maintenant aux figures 2a et 2b, il s'agit d'une illustration du principe de mise en oeuvre par voie chimique d'une électrode négative alliée "dense" avec relaxation locale de stress. En figure 2a, il s'agit de la séquence des opérations de formation du feuillard allié; en figure 2b il s'agit du comportement en coupe du feuillard déployé lors de la formation. Dans cet exemple, une pression est maintenu entre le feuillard d'aluminium déployé et le feuillard de lithium de façon à bien assurer le contact entre les feuillards et à éviter la déformation en surface des feuillards. Une élévation de la température favorise la formation rapide de l'alliage qui peut être réalisée par exemple dans le dispositif de la figure 3.

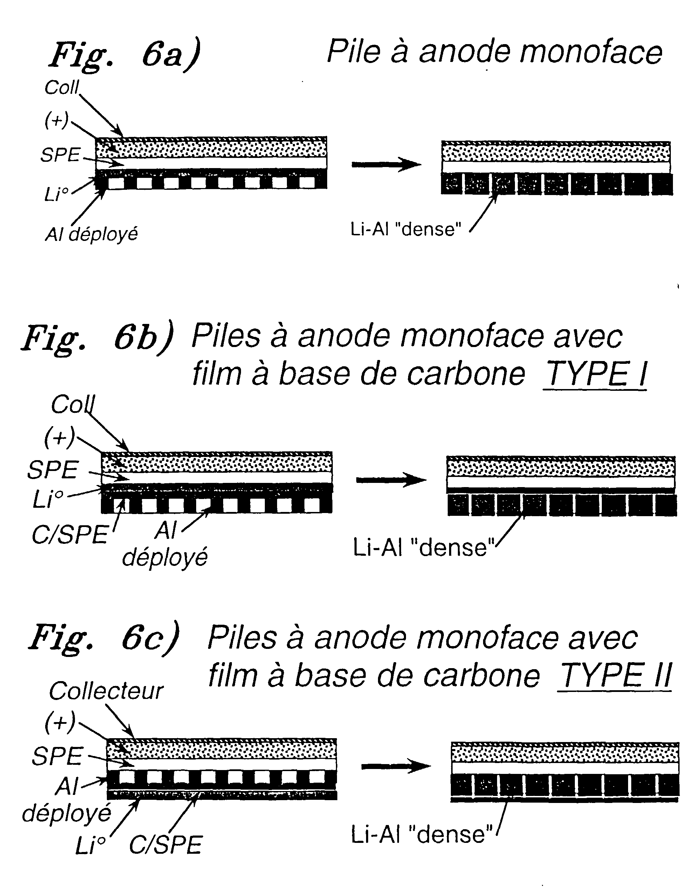

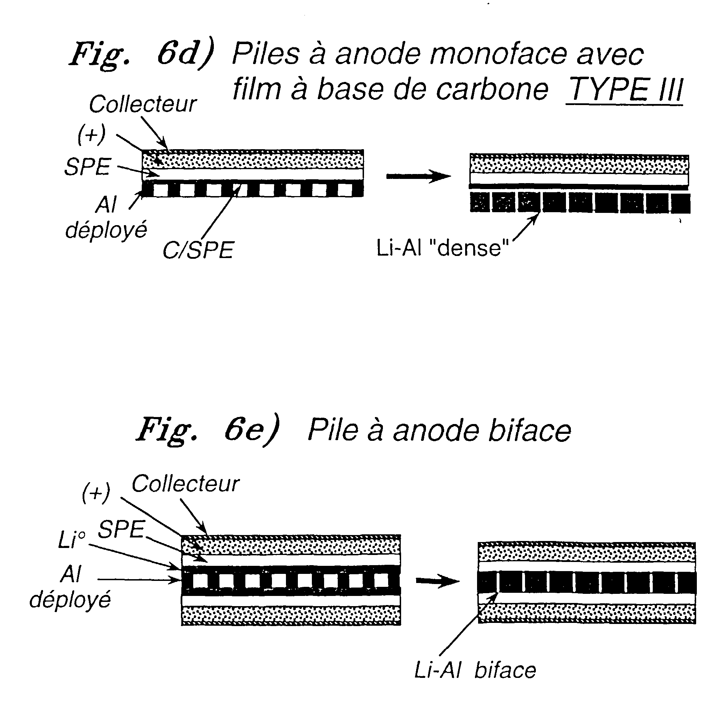

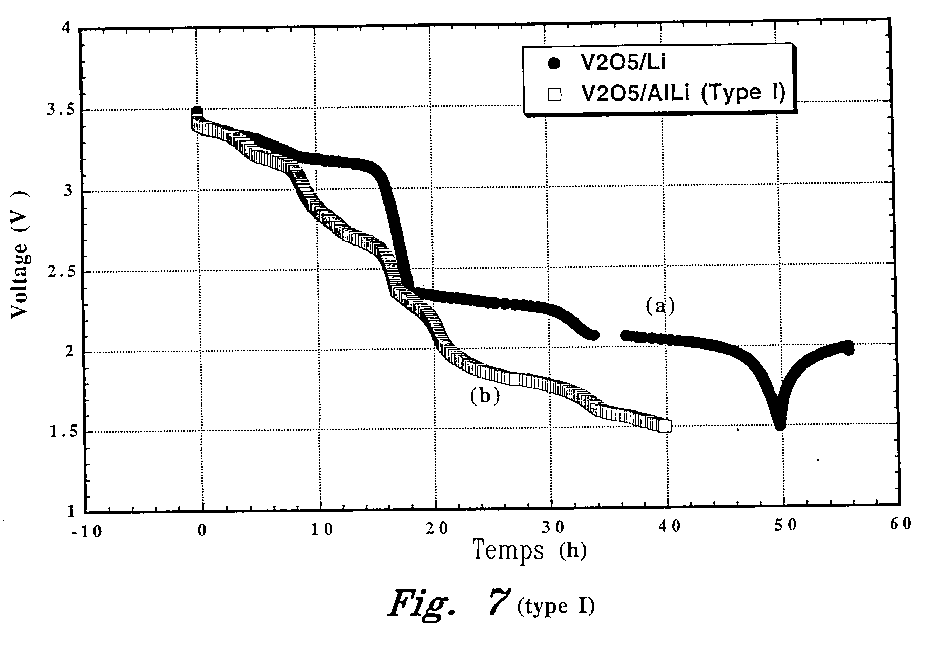

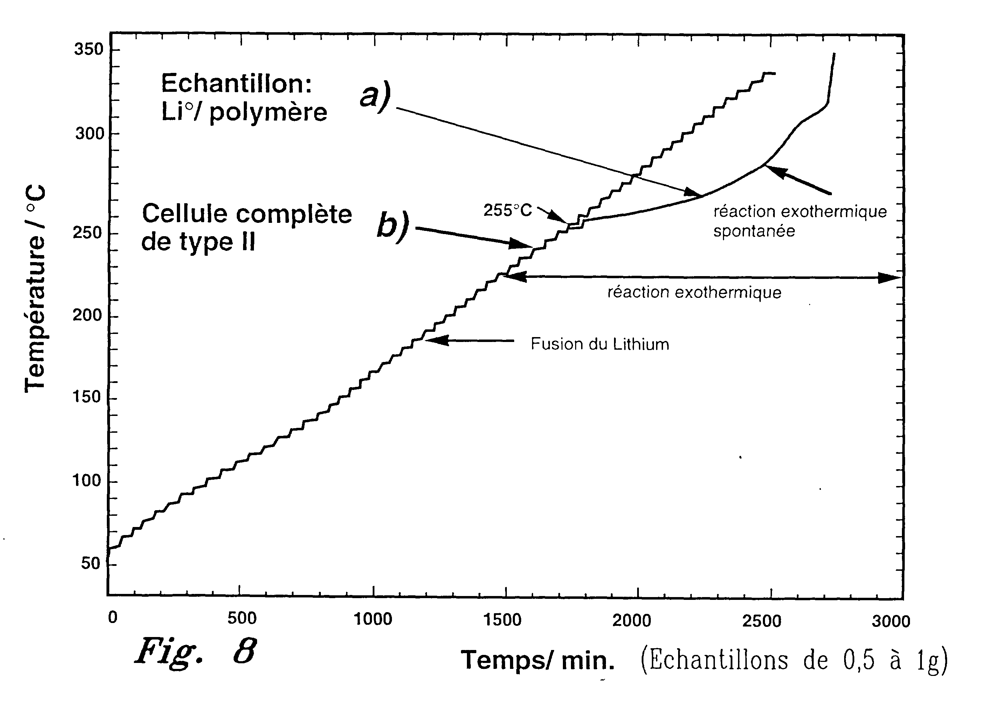

En se référant aux figures 6a à 6e, le collecteur représenté est généralement un feuillard d'aluminium ordinaire, SPE représente l'électrolyte polymère, et C désigne un mince filin de carbone dispersé dans un liant électrolyte polymère. (+) représente une cathode composite formée du matériau actif chargé, de carbone et d'un liant électrolyte polymère. H représente le feuillard du métal (A1) hôte déployé avant la formation de l'alliage LiA1. En plus de détail, il s'agit de ce qui suit:
figure 6a: pile monoface selon la séquence:
   collecteur d'A1/(+)/SPE/Li°/H;
figure 6b: pile à anode monoface avec film de composite C de Type I
   collecteur d'A1/(+)/SPE/Li °/C/H
figure 6c: pile à anode monoface avec film de composite C de Type II
   collecteur d'A1/(+)/SPE/H/C/Li°
figure 6d: pile à anode monoface préparée à l'état déchargée, avec film de composite C de type III
   collecteur d'A1/LiCoO₂/SPE/C/H
figure 6e: pile à anode biface selon la séquence:
   collecteur d'A1/(+)/SPE/Li°/H/Li°/SPE/(+)/Collecteur /(+)/Collecteur d'A1

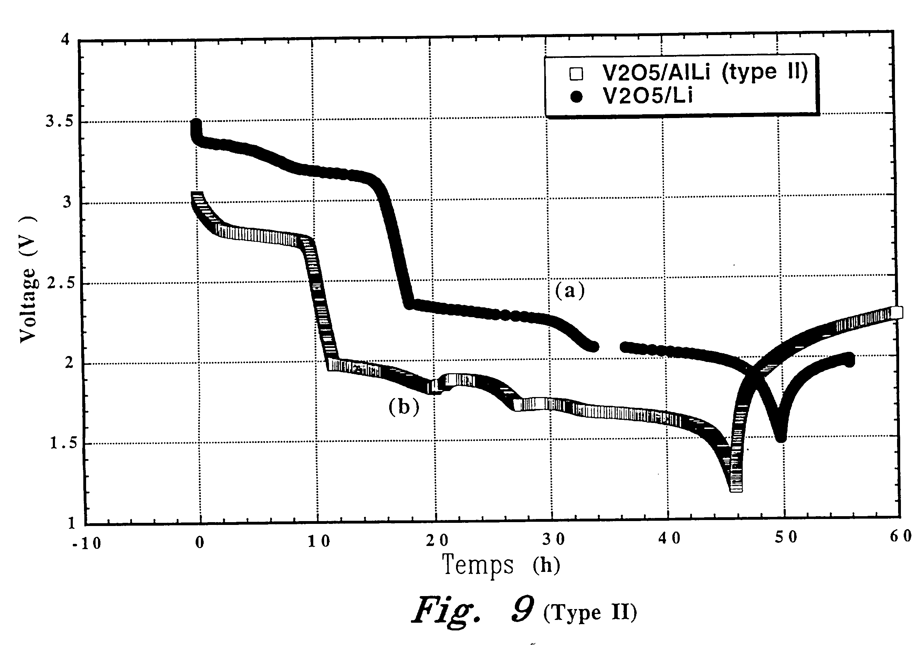

Au sujet de la figure 7, les courbes de décharges initiales comparées se rapportent aux piles suivantes:
a) collecteur d'A1/(V₂O₅)/SPE/Li°
   et
b) collecteur d'A1/(V₂O₅)/SPE/Li°C/H où H = A1 sous forme EXMET®, de Type I.

Au sujet de la figure 8, les essais de stabilité concernent les piles suivantes:
a) SPE/Li°
b) collecteur d'A1/(V₂O₅)/SPE/H/C/Li° où H = A1 sous forme EXMET®.

Sur la figure 9 les courbes de décharges initiales comparées sont celles des piles:
a) collecteur d'A1/(V₂O₅)/SPE/Li°
   et
b) collecteur d'A1/(V₂O₅)/SPE/H/C/Li° où H = A1 sous forme EXMET® de type II.

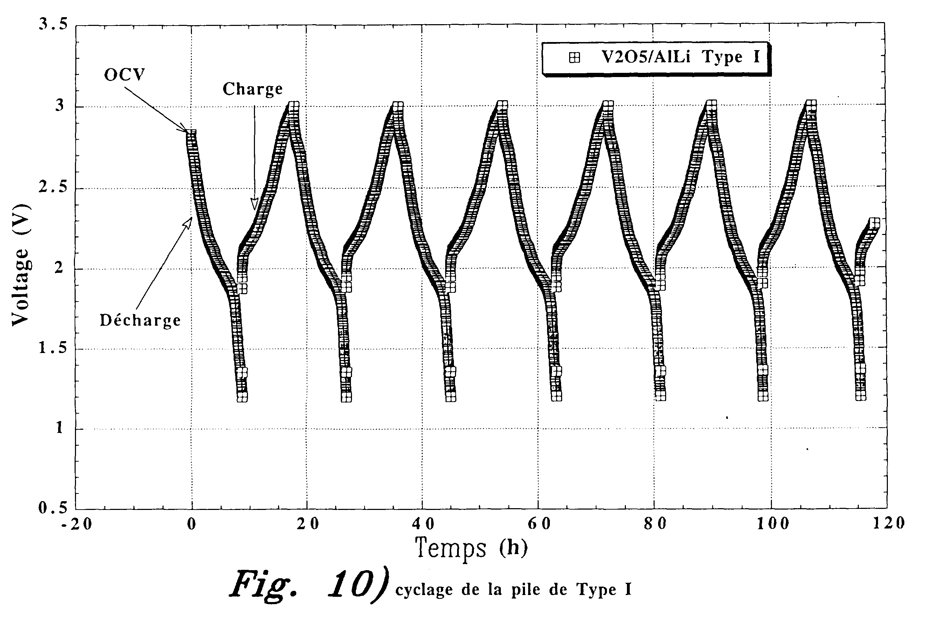

La figure 10 montre des courbes de cyclage de la pile de type 1 décrites à l'exemple 3 et à la figure 6b.

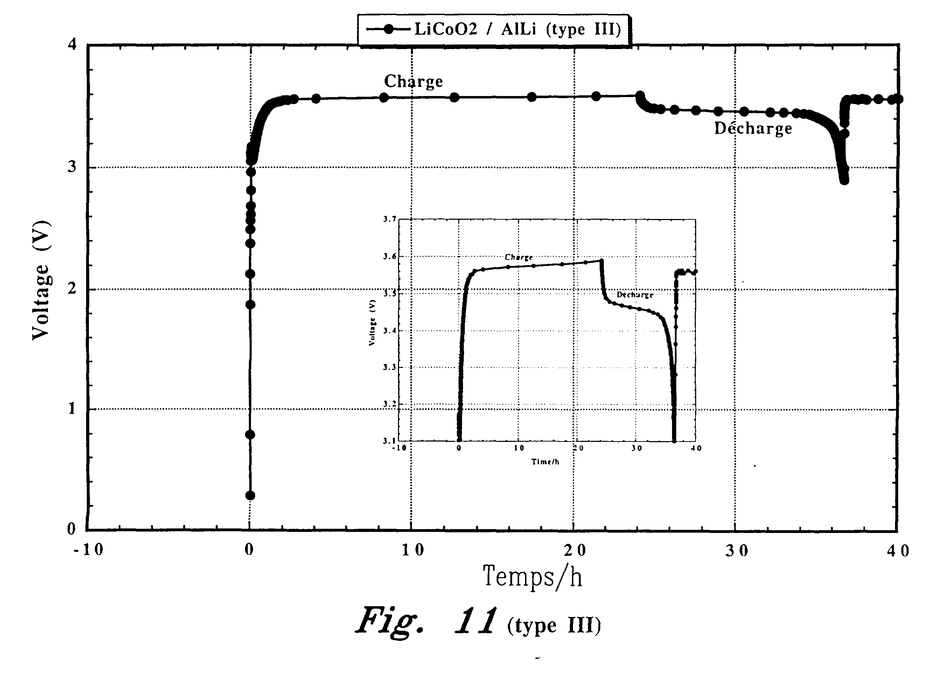

La figure 11 montre des courbes de cyclage de la pile suivante: collecteur d'A1/LiCoO₂/SPE/C/H où H = A1 sous forme EXMET®

La figure 12a est un schéma d'assemblage d'une pile enroulée à plat en mode biface et dont l'anode est formée à partir d'aluminium déployé enduit de carbone et de deux feuillards de lithium métallique accolés.

La figure 12b est un schéma de la pile enroulée à plat en mode biface déchargé et dont l'anode est formée à partir d'aluminium déployé enduit de carbone et de deux feuillards de lithium métalliques accolés et dans lequel l'excès de métal hôte est utilisé comme collecteur du feuillard d'anode et dont la structure hôte non-alliée déborde latéralement à une extrémité de l'enroulement. Sur cette figure, les débordements latéraux du collecteur d'aluminium de la cathode et du feuillard hôte de l'anode sont collectés par pulvérisation de contacts métalliques.

L'invention va maintenant être illustrée par les exemples qui suivent donnés à simple fin d'illustration, mais sans caractère limitatif.

### Exemples:

### Exemple 1

Dans cet exemple on illustre le comportement d'un feuillard d'aluminium normal de 20 micromètres lorsque mis en contact avec un feuillard de lithium métallique de 18 micromètres. Les feuillards superposés sont illustrés au début de l'essai illustré à la figure 4 et réalisé à partir du dispositif de la figure 3.

On constate après chauffage à 80°C durant une heure, que le feuillard de lithium s'est dissous par réaction avec l'aluminium et que ce dernier a formé des plis multiples ressortant du plan des feuillards en vertu de l'expansion latérale résultant de la formation de l'alliage. Dans une pile complète à électrolyte polymère, ce phénomène entraîne généralement la formation de courts-circuits.

### Exemple 2

Dans cet exemple on reproduit l'essai de l'exemple 1 en remplaçant le feuillard d'aluminium dense par un feuillard ajouré (expanded metal) tel que produit commercialement par la Compagnie EXMET de Naugatuck, Connecticut, USA. Pour faciliter la réaction complète du lithium avec l'alliage d'aluminium, on a recouvert ce dernier d'un film mince de composite C. L'aluminium utilisé mesure 25 micromètres d'épaisseur une fois aplani. La surface ajourée représente environ 50% de la surface totale du feuillard et la largeur des ouvertures est d'environ 124 micromètres. Dans cet exemple, la proportion des ouvertures est trop élevée pour qu'après réaction la structure alliée soit complètement fermée.

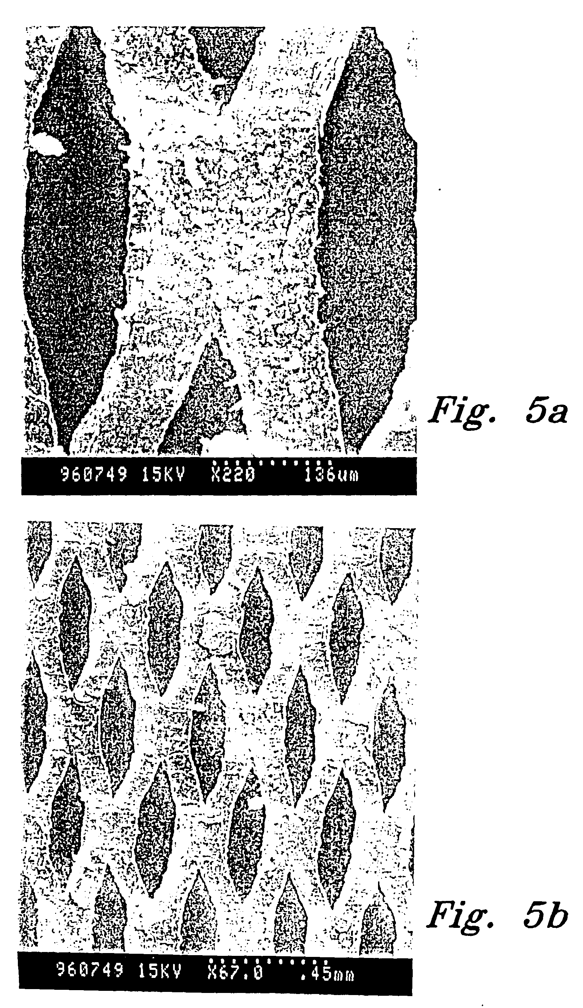

Sur la figure 5a, 5b et 4c on peut voir le détail de la structure hôte après réaction chimique avec le lithium et constater dans la seconde partie qu'aucune cannelure ne s'est développée lors de l'insertion au contraire de l'exemple 1 qui ne permet pas une absorption locale de la variation du volume et du stress. Le feuillard reste parfaitement plan, une condition essentielle pour le bon fonctionnement d'un générateur à électrolyte polymère en films minces. Un autre effet surprenant de cet essai, observable au microscope électronique (figures 5a et 5b), est de constater que la formation de l'alliage sur la maille à partir de la structure de l'aluminium produit une expansion latérale de la partie dense plus faible que ce que laissait prévoir les valeurs du tableau I. L'expansion observée est d'environ 10% alors que la valeur prévisible à partir du Tableau I serait de 94%. Ce phénomène résulte de la nature directionnelle de la source de lithium permettant l'insertion et de la nature solide du dispositif réalisé. Ces observations suggèrent qu'une structure d'aluminium (EXMET®) optimisé devrait comporter un taux, d'ajours de l'ordre de 20%.

### Exemple 3

Dans les exemples qui suivent on réalise un générateur complet d'une surface d'environ 4 cm² constitué des films suivants, illustrés pour l'exemple 3 par la figure 6 b: collecteur d'A1/(+)/SPE/Li°C/H: un collecteur d'aluminium de 13 micromètres, une cathode composite, d'environ 45 micromètres d'épaisseur, comprenant de l'oxyde de vanadium, du carbone conducteur et un liant polymère constitué d'un copolymère à base d'oxyde d'éthylène et d'un sel de lithium, le (CF₃SO₂)NLi dans un rapport: O ( du polyéther)/Li (du sel) de 30/1 en mole. La capacité de cette cathode étant d'environ 4 coulombs par centimètre carré. Le séparateur est de même nature que le liant et mesure 30 micromètres d'épaisseur. Cette demi-pile positive est assemblée par pressage à 80°C. D'autre part, un film de lithium est pressé à 80°C contre un film mince d'une composite de C d'environ 10 micromètres d'épaisseur élaboré sur un support pelable de polypropylène pour des raisons de facilité de manipulation. Ce revêtement de C est ensuite transféré à chaud à 80°C contre un feuillard EXMET®, représenté par H, de 25 micromètres d'épaisseur de façon à faciliter les échanges électriques et ioniques.

Dans un dernier temps, la demi-pile positive est transférée à 80°C sur la face lithium de l'ensemble Li°/C/H et le générateur ainsi assemblé (type I) est maintenu à 60°C pour la suite des essais qui seront décrit à l'exemple suivant.

Dans cet exemple comme dans les suivants on utilise un excès d'aluminium d'environ 20% relativement à la quantité de lithium présent au départ de façon à laisser une partie de la structure hôte non-réagi afin d'assurer la continuité de la collection de courant dans le plan du feuillard.

### Exemple 4

Dans cet exemple, on compare le comportement du générateur de l'exemple 3 (type I), à un générateur équivalent dont l'anode est un simple feuillard de lithium.

Les courbes initiales de décharge sont comparées à la figure 7 où l'on peut constater un comportement semblable mais un voltage moyen plus bas. Cet abaissement de voltage correspond à l'activité plus faible du lithium dans l'alliage Li-A1, soit entre environ +270 mV et +420 mV vs le Li°.

On montre que les performances en cyclage (figure 10) du générateur utilisant l'anode allié réalisée selon l'invention sont stabilisées et comparables avec ce qui est connu des générateurs utilisant le lithium métallique. A titre de référence, un générateur identique utilisant un feuillard d'aluminium normal développe des court-circuits et perd de la capacité dès les premiers cycles.

### Exemple 5

Cet exemple reprend les éléments des exemples 3 et 4 sauf que la position du film de la composite de carbone est différente, tel qu'indiqué à la figure 6 c. La courbe de décharge initiale est également comparée à celle d'une pile équivalente à anode de lithium et illustrée à la figure 9. L'avantage de ce dispositif est de pouvoir effectuer l'assemblage sans que la pile soit activée à ce moment. C'est uniquement lorsque la réaction de formation de l'alliage est complétée que la pile atteint son plein potentiel, ce qui rend l'opération d'assemblage encore plus sécuritaire.

### Exemple 6

Dans cet exemple on effectue un essai visant à illustrer une caractéristique importante de l'invention au niveau de la sécurité.

On utilise une pile correspondant au dispositif de l'exemple 5 illustré à la figure 6 c pour un essai comparatif de stabilité thermique avec une pile identique à anode de lithium métallique.

La technique utilisée est connue sous le nom d'ARC (Accelerated Rate Calorimetry) (Columbia Scientific, Austin, Texas USA) et porte successivement la température de l'échantillon à des températures de plus en plus élevées jusqu'à ce qu'une réaction thermique spontanée entre les éléments de la pile génèrent une chaleur additionnelle (stabilisation de la montée de température temporaire). C'est une technique sensible reconnue pour déceler des réactions exothermiques pouvant présenter un danger dans des conditions abusives d'utilisation.

Essais comparatifs de calorimetrie ARC entre: une cellule complète de type II selon l'invention telle que réalisé à l'exemple 5 et pesant environ 0,5157 g, un échantillon constitué d'un film d'électrolyte polymère identique à l'essai précédent et d'un film de lithium métallique de 22 micromètres d'épaisseur.

Avec l'échantillon illustré sur la figure figure 8, la courbe de montée de température n'indique aucun effet d'auto-échauffement dans tout le domaine de température étudié même s'il s'agit d'une pile complète.

Dans des conditions similaires l'échantillon figure 8 a) sans cathode et avec lithium métallique montre un exotherme visible vers 255°C, c'est-à-dire au dessus de la température de fusion du lithium ∼ 180°C. Un échantillon complet, c'est-à-dire contenant également une cathode présente parfois un fort exotherme résultant du court-circuit consécutif à la fusion du lithium.

Cet essai indique bien l'apport de l'invention sur le plan de la sécurité dans la mesure où l'on arrive à réaliser une anode de lithium allié, non-fusible, en film mince, sous forme dense et à réaliser ainsi un générateur entièrement à l'état solide à des températures supérieures à 300°C.

### Exemple 7

Dans cet exemple on utilise le dispositif illustré à la figure 6 d dans lequel la source de lithium provient de la cathode préparée à l'état déchargé. L'oxyde de vanadium est remplacée dans ce cas par de l'oxyde de cobalt pré-inséré préparé par synthèse.

La figure 11 montre l'évolution au cyclage du voltage de cette pile à anode monoface préparée avec un film de composite C, de type I I I et correspondent à l'assemblage suivant:
collecteur d'A1/LiCoO₂/SPE/C/H.

### Exemple 8

Dans cet exemple on assemble une pile par co-enroulement à plat des films suivants en configuration double biface, tel qu'illustré aux figures 6 e, 12 b et 12 d. Sur la figure on ne représente pas les films mince de C appliqués sur chaque face de la structure hôte.
SPE/(+)/collecteur d'A1/(+)/SPE
et
Li°, C/H/C et Li° mis en contact au moment de l'assemblage.

L'ensemble est mis sous presse à 40° puis à 80°C pour une demi-heure de façon à bien compléter la formation de l'alliage.

Les contacts latéraux sont obtenus en pulvérisant du cuivre par la technique du Shoopage (CA 2,068,290) sur les débordements latéraux du collecteur d'aluminium de la cathode et sur le débordement latéral du métal hôte d'aluminium non-réagi de l'anode.

Le comportement électrochimique de l'ensemble est équivalent à celui de la pile de 4 cm² illustrée aux exemples 3 et 4, toute proportion gardée pour les surfaces mises en jeu.

### Exemple 9

Dans cet exemple on démontre à partir du dispositif de la figure 3, le comportement d'un feuillard d'étain, ajouré par perforation laser, lors de la formation de l'alliage de composition ∼ Li₄Sn. On constate malgré le caractère rudimentaire de la préparation du feuillard que l'on supprime toute déformation dans le plan du feuillard lors de l'insertion.

| **ANODES NON FUSIBLES** | | | | | | |
|---|---|---|---|---|---|---|
| **Avant** | | | **Après** | | | |
| Anodes déchargées | cm3/Ah | cm3/C (xE-4) | Anodes chargées | cm3/Ah | cm3/C (xE-4) | Variation Cm3/Ah |
| Li | 0,49 | 1.36 | Li | 0,49 | 1,36 | 0 |
| C | 1,19 | 3,32 | LiC₆ | 1,47 | 4,09 | 23 |
| Si | 0,11 | 0,30 | Li₂₁Si₅ | 0,44 | 1,22 | 309 |
| As | 0,16 | 0,45 | Li₃As | 0,49 | 1,36 | 201 |
| Al | 0,37 | 1,04 | LiA1 | 0,72 | 2,01 | 94 |
| Sn | 0,14 | 0,40 | Li₂₁Sn₅ | 0,51 | 1,43 | 257 |
| Sb | 0,23 | 0,63 | Li₃Sb | 0,56 | 1,55 | 147 |
| Pb | 0,15 | 0,43 | Li₂₂Pb₅ | 0.52 | 1.44 | 237 |
| T-1: Tableau montrant l'expansion volumique des différents alliages calculée selon la référence: R. Nesper, Prog. Solid St. Chem., Vol 20, pp. 1-45, 1990. | | | | | | |

Il est entendu que des modifications évidentes à l'homme de l'art sont possibles sans sortir du cadre de cette invention, à la condition bien entendu qu'elles soient généralement prévues par les revendications annexées.

## Revendications

1. Générateur électrochimique comprenant des films minces incluant une électrode positive et son collecteur, et un feuillard d'un métal hôte destiné à constituer ultérieurement une électrode négative, de même qu'un électrolyte conducteur d'ions alcalins ainsi qu'un moyen constituant une source d'ions alcalins, caractérisé en ce que ledit feuillard de métal hôte est ajouré, la quantité des ajours et leur disposition dans ledit feuillard de métal hôte étant propre à absorber localement dans lesdits vides toute expansion latérale dudit feuillard de métal hôte et ainsi prévenir substantiellement tout changement cumulatif dans le plan dudit feuillard de métal hôte lorsqu'il y a formation initiale d'alliage dans ledit feuillard entre ledit métal hôte et un métal alcalin apporté par lesdits ions alcalins.

2. Générateur selon la revendication 1, à l'état chargé, caractérisé en ce que ledit feuillard est au moins en partie devenu un alliage dudit métal hôte et dudit métal alcalin.

3. Générateur selon la revendication 1 ou 2, caractérisé en ce que la source d'ions alcalins est constituée par un feuillard de métal alcalin mis en contact avec ledit feuillard de métal hôte, le métal alcalin provenant de ladite source d'ions alcalins étant allié avec ledit métal hôte lorsque le générateur est à l'état chargé.

4. Générateur selon la revendication 1 ou 2, caractérisé en ce que la source d'ions alcalins se retrouve dans l'électrode positive, le métal alcalin au départ de ladite source d'ions alcalins étant allié avec ledit métal hôte lorsque le générateur est à l'état chargé.

5. Générateur selon la revendication 1 ou 2, caractérisé en ce que la source d'ions alcalins est constituée par un feuillard de métal alcalin mis en contact avec ledit feuillard de métal hôte, et se retrouve aussi dans l'électrode positive, le métal alcalin au départ dudit feuillard de métal alcalin et de ladite source d'ions alcalins étant allié avec ledit métal hôte lorsque le générateur est à l'état chargé.

6. Générateur selon la revendication 1 ou 2, dans lequel le métal hôte est constitué d'un métal capable de former des alliages à haute activité en métal alcalin et dans lequel la diffusion du métal alcalin est rapide.

7. Générateur selon les revendications 1 à 6, dans lequel le constituant principal du métal hôte est choisi parmi Al, C, Sn, Pb, Ag, Si, Zn, Mg ou des combinaisons de ces derniers.

8. Générateur selon les revendications 1 à 7, dans lequel les vides du feuillard de métal hôte représentent entre environ 5 et 80% de la surface totale ou de la masse dudit feuillard de métal hôte.

9. Générateur selon les revendications 1 à 8, dans lequel l'électrolyte conducteur d'ions alcalins comprend un électrolyte polymère.

10. Générateur selon les revendications 1 à 9 , dans lequel le métal hôte est en quantité excédentaire par rapport au métal alcalin de façon à laisser une partie du métal hôte non réagi lui permettant ainsi d'agir comme collecteur de courant sur le plan du feuillard de métal hôte.

11. Générateur selon la revendication 3, dans lequel le feuillard d'électrode négative en alliage est obtenu après assemblage dudit générateur par traitement thermique dudit feuillard de métal hôte et dudit feuillard de métal alcalin en contact avec ledit feuillard de métal hôte, ledit traitement thermique étant effectué sous pression ou confinement mécanique et dans des conditions assurant le maintien de la planéité du feuillard d'électrode négative.

12. Générateur selon les revendications 1 à 11, dans lequel le feuillard de métal hôte a une épaisseur entre environ 1 et 150 µm.

13. Méthode de fabrication d'un générateur électrochimique selon laquelle on prépare des films minces incluant une électrode positive et son collecteur, et un feuillard d'un métal.hôte destiné à constituer ultérieurement une électrode négative de même qu'un électrolyte conducteur d'ions alcalins ainsi qu'un moyen constituant une source d'ions alcalins et que l'on dispose l'électrode négative et ledit feuillard de part et d'autre dudit électrolyte conducteur, caractérisé en ce que l'on choisit ledit feuillard à partir d'un feuillard d'un métal hôte présentant des ajours, la quantité des ajours et leur disposition dans ledit feuillard de métal hôte étant propre à absorber localement dans lesdits vides toute expansion latérale dudit feuillard de métal hôte et ainsi prévenir substantiellement tout changement cumulatif dans le plan dudit feuillard de métal hôte lorsqu'il y a formation initiale d'alliage dans ledit feuillard entre ledit métal hôte et un métal alcalin apporté par lesdits ions alcalins, et l'on assemble ensuite les films, l'électrolyte conducteur et la source d'ions alcalins de façon à constituer ledit générateur.

14. Méthode selon la revendication 13, caractérisée en ce que l'on met en contact le dit feuillard de métal hôte avec un feuillard de métal alcalin et l'on effectue ainsi la charge du générateur, le métal alcalin étant alors allié avec ledit métal hôte.

15. Méthode selon la revendication 13, caractérisée en ce que l'on localise la source d'ions alcalins dans l'électrode positive, et l'on effectue alors la charge électrochimique du générateur, le métal alcalin au départ de ladite source d'ions alcalins étant allié avec ledit métal hôte.

16. Méthode selon les revendications 13 à 15, dans laquelle l'on traite le feuillard de métal hôte par découpe-étirement et éventuellement relaminage pour obtenir ledit feuillard présentant des vides sous forme de métal déployé.

17. Méthode selon les revendications 13 à 16, caractérisée en ce que l'on introduit une couche d'électrolyte polymère sur le feuillard de métal hôte sur au moins l'une de ses faces, et que l'on dispose ladite couche sur ledit feuillard de métal hôte de façon à maximiser les échanges ioniques entre l'alliage et l'électrolyte conducteur d'ions alcalins agissant comme séparateur entre l'électrode négative et l'électrode positive.

18. Méthode selon la revendication 17, caractérisée en ce que l'on introduit du carbone dans l'électrolyte polymère et que l'on distribue ce dernier dans ledit électrolyte polymère de façon à ce qu'il agisse comme additif de conduction électronique, afin de maximiser les échanges ioniques et les échanges électroniques.

## Patentansprüche

1. Elektrochemischer Generator, umfassend dünne Filme, die eine positive Elektrode und ihren Kollektor enthalten, und ein Blech aus einem Wirtsmetall, das dazu ausgelegt ist, später eine negative Elektrode zu bilden, sowie einen leitfähigen Alkaliionenelektrolyt und ein Mittel, das eine Alkaliionenquelle bildet, **dadurch gekennzeichnet,** daß das Wirtsmetallblech mit Aussparungen versehen ist, wobei die Menge der Aussparungen und ihre Anordnung in dem Wirtsmetallblech geeignet sind, lokal in den Aussparungen jede seitliche Ausdehnung des Wirtsmetallblechs zu absorbieren und somit im wesentlichen jede kumulative Änderung in der Ebene des Wirtsmetallblechs zu verhindern, wenn in dem Blech eine Anfangslegierungsbildung zwischen dem Wirtsmetall und einem durch die Alkaliionen zugeführten Alkalimetall auftritt.

2. Generator nach Anspruch 1 im geladenen Zustand, **dadurch gekennzeichnet,** daß das Blech wenigstens teilweise eine Legierung aus dem Wirtsmetall und dem Alkalimetall geworden ist.

3. Generator nach Anspruch 1 oder 2, **dadurch gekennzeichnet,** daß die Alkaliionenquelle durch ein in Kontakt mit dem Wirtsmetallblech gebrachtes Alkalimetallblech gebildet ist, wobei das aus der Alkaliionenquelle stammende Alkalimetall mit dem Wirtsmetall legiert ist, wenn der Generator im geladenen Zustand ist.

4. Generator nach Anspruch 1 oder 2, **dadurch gekennzeichnet,** daß sich die Alkaliionenquelle in der positiven Elektrode befindet, wobei das die Alkaliionenquelle verlassende Alkalimetall mit dem Wirtsmetall legiert ist, wenn der Generator im geladenen Zustand ist.

5. Generator nach Anspruch 1 oder 2, **dadurch gekennzeichnet,** daß die Alkaliionenquelle durch ein in Kontakt mit dem Wirtsmetallblech gebrachtes Alkalimetallblech gebildet ist und sich ebenfalls in der positiven Elektrode befindet, wobei das das Alkalimetallblech und die Alkaliionenquelle verlassende Alkalimetall mit dem Wirtsmetall legiert ist, wenn der Generator im geladenen Zustand ist.

6. Generator nach Anspruch 1 oder 2, bei dem das Wirtsmetall durch ein Metall gebildet ist, das in der Lage ist, Alkalimetallegierungen mit hoher Aktivität zu bilden, und bei dem die Diffusion des Alkalimetalls schnell ist.

7. Generator nach den Ansprüchen 1 bis 6, bei dem der Hauptbestandteil des Wirtsmetalls aus Al, C, Sn, Pb, Ag, Si, Zn, Mg oder Kombinationen dieser letzteren gewählt ist.

8. Generator nach den Ansprüchen 1 bis 7, bei dem die Aussparungen des Wirtsmetallblechs zwischen ungefähr 5 und 80 % der Gesamtoberfläche oder der Masse des Wirtsmetallblechs darstellen.

9. Generator nach den Ansprüchen 1 bis 8, bei dem der leitfähige Alkaliionenelektrolyt einen Polymerelektrolyt umfaßt.

10. Generator nach den Ansprüchen 1 bis 9, bei dem das Wirtsmetall in einer derartigen Überschußmenge bezüglich des Alkalimetalls vorliegt, daß ein Teil des Wirtsmetalls unreagiert verbleibt, was es ihm somit ermöglicht, als Stromkollektor in der Ebene des Wirtsmetallblechs zu wirken.

11. Generator nach Anspruch 3, bei dem das legierte Blech der negativen Elektrode nach Zusammenbau des Generators durch thermische Behandlung des Wirtsmetallblechs und des in Kontakt mit dem Wirtsmetallblech stehenden Alkalimetallblechs erhalten wird, wobei die thermische Behandlung unter Druck oder mechanischem Einschluß und unter Bedingungen erfolgt, die das Beibehalten der Ebenheit des Blechs der negativen Elektrode gewährleisten.

12. Generator nach den Ansprüchen 1 bis 11, bei dem das Wirtsmetallblech eine Dicke zwischen ungefähr 1 und 150 µm hat.

13. Verfahren zur Herstellung eines elektrochemischen Generators, bei dem man dünne Filme, die eine positive Elektrode und ihren Kollektor enthalten, und ein Wirtsmetallblech herstellt, das dazu ausgelegt ist, später eine negative Elektrode zu bilden, sowie einen leitfähigen Alkaliionenelektrolyt und ein Mittel herstellt, das eine Alkaliionenquelle bildet, und wobei man die negative Elektrode und das Blech auf beiden Seiten des Elektrolytleiters anordnet, dadurch gekennzeichnet, daß man das Blech ausgehend von einem Aussparungen aufweisenden Blech eines Wirtsmetalls auswählt, wobei die Menge der Aussparungen und ihre Anordnung in dem Wirtsmetallblech geeignet sind, lokal in den Aussparungen jede seitliche Ausdehnung des Wirtsmetallblechs zu absorbieren und somit im wesentlichen jede kumulative Änderung in der Ebene des Wirtsmetallblechs zu verhindern, wenn in dem Blech eine Anfangslegierungsbildung zwischen dem Wirtsmetall und einem durch die Alkaliionen zugeführten Alkalimetall eintritt, und daß man anschließend die Filme, den Elektrolytleiter und die Alkaliionenquelle derart zusammenbaut, daß sie den Generator bilden.

14. Verfahren nach Anspruch 13, **dadurch gekennzeichnet,** daß man das Wirtsmetallblech in Kontakt mit einem Alkalimetallblech bringt und dann die Aufladung des Generators durchführt, wobei das Alkalimetall dann mit dem Wirtsmetall legiert wird.

15. Verfahren nach Anspruch 13, **dadurch gekennzeichnet,** daß man die Alkaliionenquelle in der positiven Elektrode anordnet, und daß man dann die elektrochemische Aufladung des Generators durchführt, wobei das die Alkaliionenquelle verlassende Alkalimetall mit dem Wirtsmetall legiert wird.

16. Verfahren nach den Ansprüchen 13 bis 15, bei dem man das Wirtsmetallblech durch Schneiden-Ziehen und eventuelles Umwalzen behandelt, um das Aussparungen aufweisende Blech in Gestalt von ausgebreitetem Metall zu erhalten.

17. Verfahren nach den Ansprüchen 13 bis 16, **dadurch gekennzeichnet,** daß man auf wenigstens eine der Flächen des Wirtsmetallblechs eine Polymerelektrolytschicht aufbringt, und daß man die Schicht derart auf dem Wirtsmetallblech anordnet, daß der lonenaustausch zwischen der Legierung und dem leitfähigen Alkaliionenelektrolyt maximiert wird, der als Separator zwischen der negativen Elektrode und der positiven Elektrode wirkt.

18. Verfahren nach Anspruch 17, **dadurch gekennzeichnet,** daß man Kohlenstoff in den Polymerelektrolyt zuführt und letzteren im Polymerelektrolyt derart verteilt, daß er als Elektronenleitungsadditiv wirkt, um den Ionen- und den elektronischen Austausch zu maximieren.

## Claims

1. An electrochemical generator comprising thin films including a positive electrode and its collector, and a sheet of a host metal intended to later on constitute a negative electrode, as well as an electrolyte which is conductive towards alkali ions and also means constituting a source of alkali ions, characterized in that said sheet of host metal is formed with through-voids, the quantity of through-voids and their arrangement in said sheet of host metal being adapted to locally absorb in said voids any lateral expansion of said sheet of host metal, thus substantially preventing any cumulative change in the plane of said sheet of host metal when there is initial formation of alloy in said sheet between said host metal and an alkali metal brought about by said alkali ions.

2. A generator according to claim 1, in charged state, characterized in that said sheet is at least in part converted into an alloy of said host metal and of said alkali metal.

3. A generator according to claim 1, characterized in that the source of alkali ions consists of a sheet of alkali metal which is in contact with said sheet of host metal, the alkali metal originating from said source of alkali ions being alloyed with said host metal when the generator is in charged state.

4. A generator according to claim 1 or 2, characterized in that the source of alkali ions is found in the positive electrode, the alkali metal originating from said source of alkali ions being alloyed with said host metal when the generator is in charged state.

5. A generator according to claim 1 or 2, characterized in that the source of alkali ions is a sheet of alkali metal which is in contact with said sheet of host metal and is also found in the positive electrode, the alkali metal originating from said sheet of alkali metal and from said source of alkali ions being alloyed with the said host metal when the generator is in charged state.

6. A generator according to claim 1 or 2, in which the host metal consists of a metal capable of forming alloys of high activity in alkali metal and in which diffusion of the alkali metal is rapid.

7. A generator according to claims 1 to 6, in which the main component of the host metal is selected from Al, C, Sn, Pb, Ag, Si, Zn, Mg or combinations thereof.

8. A generator according to claims 1 to 7, in which the voids in the sheet of host metal represent between about 5 and 80% of the total surface of the mass of said sheet of host metal.

9. A generator according to claims 1 to 8, in which the electrolyte which is conductive towards alkali ions comprises a polymer electrolyte.

10. A generator according to claims 1 to 9, in which the host metal is in an excess amount with respect to the alkali metal so as to leave part of the host metal non-reacted thereby enabling it to act as a current collector on the plane of the sheet of host metal.

11. A generator according to claim 3, in which the alloy sheet of negative electrodes is obtained after assembling said generator by thermal treatment of said sheet of host metal and of said sheet of alkali metal in contact with said sheet of host metal, said thermal treatment being carried out under pressure or by mechanical confinement and under conditions ensuring maintenance of the planar condition of the sheet of negative electrode.

12. A generator according to claims 1 to 11, in which the sheet of host metal has a thickness between about 1 and 150 µm.

13. A method of preparing an electrochemical generator which comprises preparing thin films including a positive electrode and its collector, and a sheet of a host metal intended to later on constitute a negative electrode as well as an electrolyte which is conductive towards alkali ions, and also means consisting of a source of alkali ions and placing the negative electrode and said sheet on either part of said conductive electrolyte, wherein said sheet is selected from a sheet of a host metal having through-voids, the quantity of through-voids and their arrangement in said sheet of host metal being adapted to locally absorb in said voids any lateral expansion of said sheet of host metal and thus to substantially prevent any cumulative change in the plane of said sheet of host metal when there is initial formation of alloy in said sheet between said host metal and an alkali metal brought about by said alkali ions, and thereafter assembling the films, the conductive electrolyte and the source of alkali ions so as to constitute said generator.

14. A method according to claim 13, characterized in that said sheet of host metal is contacted with a sheet of alkali metal after which the generator is charged, the alkali metal being then alloyed with said host metal.

15. A method according to claim 13, characterized in that the source of alkali ions is localized in the positive electrode, and the generator is then electrochemically charged, the alkali metal originating from said source of alkali ions being alloyed with said host metal.

16. A method according to claims 13 to 15, in which the sheet of host metal is treated by cutting - stretching and eventually relaminating to obtain said sheet presenting voids in the form of expanded metal.

17. A method according to claims 13 to 16, characterized in that there is introduced a layer of polymer electrolyte on the sheet of host metal, on at least one face thereof, and that said layer is disposed on said sheet of host metal so as to maximize ionic exchanges between the alloy and the electrolyte which is conductive towards alkali ions and act as separator between the negative electrode and the positive electrode.

18. A method according to claim 17, characterized in that carbon is introduced in the polymer electrolyte and that the latter is distributed in said polymer electrolyte so as to act as an additive of electronic conduction, thereby maximizing ionic and electronic exchanges.
